(19)

Europäisches
Patentamt
European
Patent Office
Office européen
des brevets

(11) **EP 2 157 798 A1**

(12) **EUROPEAN PATENT APPLICATION**

(43) Date of publication:
**24.02.2010 Bulletin 2010/08**

(51) Int Cl.:
***H04N 7/26*** *(2006.01)*

(21) Application number: **08305486.6**

(22) Date of filing: **18.08.2008**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(71) Applicant: **Thomson Licensing
92443 Issy-les-Moulineaux Cedex (FR)**

(72) Inventors:
• **An, Jicheng
100085, Beijing (CN)**

• **Chen, Quqing
100085, Beijing (CN)**
• **Chen, Zhibo
100085, Beijing (CN)**
• **Teng, Jun
100085, Beijing (CN)**

(74) Representative: **Rittner, Karsten
Deutsche Thomson OHG
European Patent Operations
Karl-Wiechert-Allee 74
30625 Hannover (DE)**

(54) **Method for encoding an image, method for decoding an image, encoder, decoder and signal or storage medium carrying an encoded image**

(57)     The invention relates to a method for encoding an image, a method for decoding an image, an encoder, a decoder and a signal or a storage medium carrying an encoded image.

Said decoding method comprises de-quantizing the current index value by determining, by help of one or more neighbouring index values, a current context of a current index value and selecting a de-quantization value from a set of reconstruction values ($-x_0''$, $-x_{0'}$, $x_0$, $x_{0'}$, $x_0''$) wherein the selection depends on the current context.

By context-dependent de-quantization of the current index value, quality loss due to quantization to said current index value is reduced.

Figure 3

**Description**

Background

The invention relates to a method for encoding an image, a method for decoding an image, an encoder, a decoder and a signal or a storage medium carrying an encoded image.

Still image or video image encoding standards like H.264 or JPEG2000 are based on two fundamental techniques, that is, transformation, for instance discrete cosine transformation (DCT) or discrete wavelet transformation (DWT), and quantization.

Quantization is a many-to-one mapping of transformation coefficients onto one of several quantization index values each representing a different, separate coefficient value interval.

While transformation reduces redundancies in and thus the size of the image without removing information, quantization reduces image size by removal of information due to the many-to-one mapping.

In dependency on the requirements, a degree of quantization can be adjusted. The stronger the quantization and thus the achieved compression ratio, the more information is lost and the more annoying and well perceivable artefacts are introduced.

There is an ongoing effort in the art to improve the quality of decoded images.

Invention

The invention proposes a method for decoding an encoded image wherein said method comprises the features of claim 1.

Said decoding method comprises de-quantizing the current index value by determining, by help of one or more neighbouring index values, a current context of a current index value and selecting a de-quantization value from a set of reconstruction values wherein the selection depends on the current context.

By context-dependent de-quantization of the current index value, quality loss due to quantization to said current index value is reduced.

In an embodiment, said decoding method further comprises receiving one or more alternative reconstruction values comprised in side information of the encoded image, wherein the set of reconstruction values comprises one or more pre-defined reconstruction values and the received alternative reconstruction values.

The invention also proposes a method for encoding an image wherein said encoding method comprises the features of claim 3.

That is, said encoding method comprises the steps of transforming at least a part of the image into a set of coefficients, determining coefficients of the set which are situated in a current context and which are quantized to a current index value, analysing the determined coefficients, determining a alternative reconstruction value based on the analysis and encoding as side information, information concerning the alternative reconstruction value.

In an embodiment, said encoding method further comprises determining the current index value by analysis of the set of transform coefficients.

In a further embodiment, said method further comprises encoding at least one further alternative reconstruction value in said side information, said at least one further alternative reconstruction value being determined by analysis of context-dependency of coefficients quantized to a further index value.

The current context may depend on a horizontal context based on the signs of horizontally neighbouring index values and on a vertical context based on the signs of vertically neighbouring index values.

The current context may further depend on a subband to which the current index value belongs.

Then, the current context may only depend on a low frequency component of the subband, if the high frequency component is equal to 0.

The invention further proposes a decoding device according to claim 9.

Said decoder comprises means for determining, by help of one or more neighbouring index values, a current context of a current index value and means for selecting a de-quantization value from a set of reconstruction values which comprises one or more pre-defined reconstruction values wherein the selection depends on the current context.

In an embodiment, the decoder further comprises means for receiving the one or more alternative reconstruction values as side information of the encoded image.

The invention further proposes an encoding device according to claim 11. Said encoder comprises a transformer for transforming at least a part of the image into coefficients, a quantizer for mapping coefficients to one of at least two index values, means for selecting coefficients which are situated in a current context and which are mapped to a current index value, means for analysing the selected coefficients, means for determining an alternative reconstruction value based on the analysis and means for encoding as side information, information concerning the alternative reconstruction value.

The invention further proposes a signal or storage medium comprising an encoded image with side information with features according to claim 15. That is, said side information comprises information concerning one or more alternative reconstruction values allowing for context-dependent de-quantization of a pre-defined quantization index of the encoded image.

Said side information may further comprise the current index value and/or the alternative reconstruction value may be an absolute value.

Then, the decoding method or the decoding device may further comprise determination of a de-quantization sign based on the current context.

Drawings

Exemplary embodiments of the invention are illustrated in the drawings and are explained in more detail in the following description.

In the figures:

Fig. 1     exemplarily depicts prior art de-quantization with $\xi{=}0$ and $\delta{=}0.5$,

Fig. 2     shows context-dependent probability distributions of DWT coefficients with quantization index 0 of an exemplary picture,

Fig. 3     depicts de-quantization with $\xi{=}0$ and $\delta{=}0.5$ according to an exemplary embodiment of the invention,

Fig. 4     depicts an exemplary context determination

Fig. 5     depicts exemplary labelling of vertical and horizontal context configurations in dependency on the subband,

Fig. 6     depicts an exemplary encoder and

Fig. 7     depicts an exemplary decoder.

Exemplary embodiments

In common lossy data compression systems like H.264, JPEG or JPEG2000, quantization stage is the primary reason for distortion. The main principle of quantization can be expressed with (1) that describes the quantization and with (2) that describes the inverse quantization.

$$q = Q(x) \qquad\qquad (1)$$

$$x_q = Q^{-1}(q) \qquad\qquad (2)$$

wherein $x$ denotes the data (vector or scalar) input to a quantizer. The $q$ is the quantization index which is the output of quantizer and input of inverse quantizer or de-quantizer. The $x_q$ is the reconstruction value which is the output of inverse quantizer. It is a many-to-one mapping of the input data $x$ to quantization index $q$ given by (1), and a one-to-one mapping of quantization index $q$ to reconstruction value $x_q$ given by (2). Ideally, the $x_q$ is the mean of input data x which satisfy $Q(x){=}q$ so as to minimize the Mean Square Error (MSE)

$$x_q = \frac{1}{\left\|C_q\right\|}\sum_{x \in C_q} x \qquad\qquad (3)$$

$$C_q = \{x | Q(x) = q\} \tag{4}$$

This reconstruction rule takes into account only the global statistics of input data $x$ quantized to a certain index $q$. It is the optimal reconstruction rule when the statistics of input data $x$ quantized to a certain index $q$ is context independent. However, in practice, there are often correlations existing among the transformed coefficients which are usually the input data of the quantizer. The probability distribution of input data $x$ quantized to a certain index $q$ is correlated with its contextual information. Located in different context, the input data $x$ with the same $q$ have different probability distributions and/or means. Therefore, it is inappropriate to reconstruct the quantization index $q$ located in different context with the same reconstruction value.

Below, an example of wavelet image decomposition with dead-zone uniform scalar quantization is described. The dead-zone uniform scalar quantizer has the following characteristics:

$$q = Q(x) = \begin{cases} sign(x) \left\lfloor \dfrac{|x|}{\Delta} + \xi \right\rfloor, & \text{for} \quad \dfrac{|x|}{\Delta} + \xi > 0 \\ 0, & otherwise. \end{cases} \tag{5}$$

wherein $\Delta$ is the step-size. The $\xi$ controls the width of dead-zone. $\xi = 0$ yields the dead-zone width of $2\Delta$.

The construction rule of dead-zone uniform scalar quantizer can be expressed by the following equation

$$x_q = \begin{cases} sign(q)(|q| - \xi + \delta) * \Delta, & \text{for} \quad q \neq 0 \\ 0, & otherwise. \end{cases} \tag{6}$$

Where $0 < \delta < 1$ controls the offset of $x_q$ in quantization zone with index q. The $x_q$ lies in the middle point of quantization zone with index $q$ when $\delta = 0.5$. The $\delta$ can be determined by help of (3), which does not consider the contextual information.

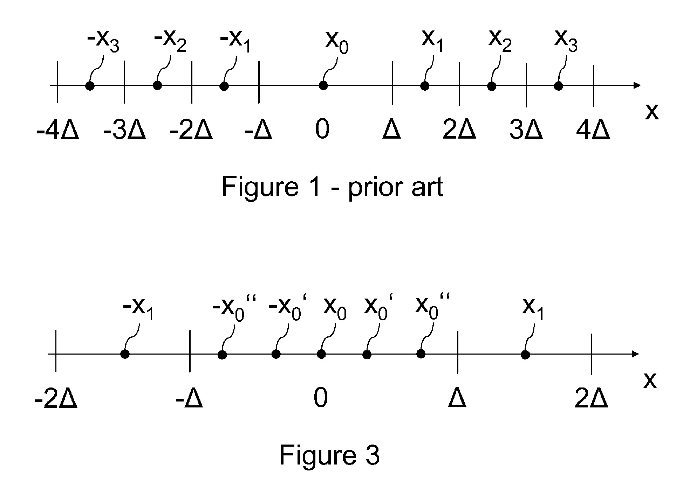

De-quantization with $\xi = 0$ and $\delta = 0.5$ is exemplarily depicted in Fig. 1.

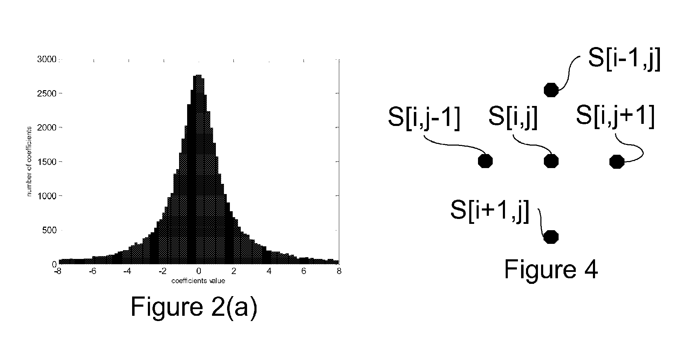

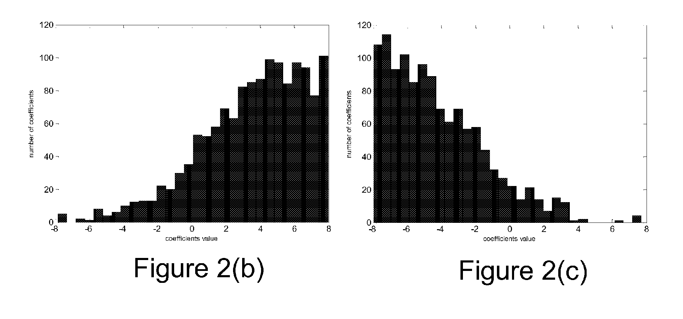

Fig. 2 shows different probability distributions of DWT coefficients with quantization index 0 of an exemplary gray scale picture. Fig. 2 (a) shows that the probability distribution of coefficients in HL subband averaged over all contexts is centred at default reconstruction value which is 0. Fig. 2 (b) shows that in a context where the two horizontal neighboring quantization indices (left and right) are both non-positive and at least one of the two is negative, said context being called context2 in the following, the distribution is no longer centred at 0. The mean in fig. 2 (b) is 3.56 which therefore is an alternative reconstruction value which fits input data in context2 better than the default reconstruction value and therefore may be used for de-quantizing a zero quantization index in context2. Similarly, in a context called context-2, where the two horizontal neighboring quantization indices are both non-negative and at least one of the two is positive, the current coefficients with quantization index 0 have probability distribution with a mean of -4.23 as shown in Fig. 2 (c). Thus, 4.23 is another alternative reconstruction value which fits input data in context-2 better than the default reconstruction value and therefore may be used instead of the default reconstruction value for de-quantizing a zero quantization index in context2.

Due to the context-dependency of the mean of the probability distributions, a context-based inverse quantization is proposed and exemplarily depicted in fig. 3. Thus, the prior-art many-to-one mapping resulting from quantization and de-quantization is replaced by a many-to-some mapping as the same quantization index is mapped onto different reconstruction values in dependency on the context, i.e. in dependency on neighbouring coefficients. The different reconstruction values may be pre-defined and fixed, then no statistical analysis has to be made by the encoder and no side information needs to be transmitted. But, the quality gain may be limited.

A higher quality gain is to be expected if image-dependent additional reconstruction values are determined by an encoder and added to the encoded image as side information. This reduces distortion significantly while the additional bit rate required for the side information is almost negligible.

Even higher quality improvements may be achieved if a most suited index value is determined by analysis of the transformed image said determined index value being further comprised in the side information of the image.

The inventive principle of changing the many-to-one mapping of prior-art quantization/de-quantization into an additional reconstruction value based many-to-some quantization/de-quantization may be applied for several, pre-defined or image-dependent, index values.

That is, a signal or storage medium carries side information of the encoded image wherein the side information comprises one or more first alternative reconstruction values, optionally together with a corresponding first index value. And, the side information may further comprise one or more second alternative reconstruction values, optionally together with a corresponding second index value.

For said classification an adjuvant horizontal context h[i,j] and an adjuvant vertical context v[i,j] are determined as follows:

$$h[i,j] = sign(S[i,j-1]) + sign(S[i,j+1]) \qquad (7)$$

$$v[i,j] = sign(S[i-1,j]) + sign(S[i+1,j]) \qquad (8)$$

wherein

$$sign(q) = \begin{cases} 1, & if \quad q > 0 \\ 0, & if \quad q = 0 \\ -1, if \quad q < 0 \end{cases} \qquad (9)$$

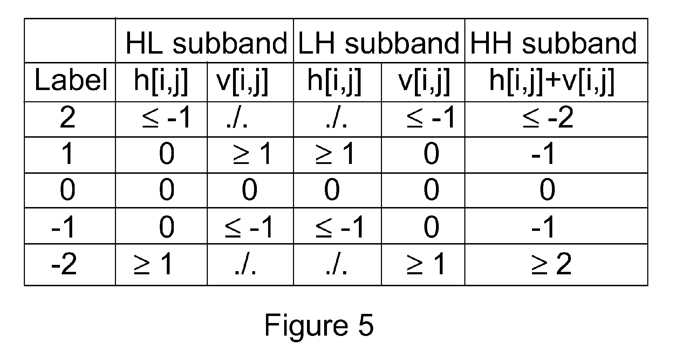

Exemplarily, the 81 different possible configurations of the horizontally and vertically coefficients S[i-1,j], S[i,j-1], S[i+1,j], S[i,j+1] neighbouring coefficient S[i,j], as exemplarily depicted in fig. 4, are classified into one of five different contexts labelled with one of the five labels 2, 1, 0, -1, -2. This is exemplarily depicted in fig. 5.

The figure shows the dependency of the context, in which a current coefficient is classified, respectively, the dependency of the label, with which it is labelled, on the vertical and/or horizontal context as depicted for the exemplary embodiment of 5 different contexts for zero quantization index.

It can be seen that the context corresponding to the low frequency component of a subband, i.e. the vertical context in HL subband and the horizontal context in LH subband, only is of relevance for determination of the label if the other context corresponding to the high frequency component of a subband, i.e. the horizontal context in HL subband and the vertical context in LH subband, is 0. Otherwise, the context of subbands comprising a high frequency component and a low frequency component only depends on the context corresponding the high frequency component. The independence from the context corresponding to the low frequency component in case of a non-zero context corresponding to the high frequency component is expressed in the table of fig. 5 by the symbol ./.

After the 2D-DWT decomposition, the HL subband has high frequency in the horizontal direction, and low frequency in the vertical direction. The LH subband has high frequency in the vertical direction, and low frequency in the horizontal direction. The HH subband has high frequency in both the horizontal and the vertical directions. The HL, LH, and HH subbands all have approximate zero mean. Therefore, in HL subband, the two horizontal neighboring indices are expected to have opposite signs and the two vertical neighboring indices are expected to have the same sign. In LH subband, the two vertical neighboring indices are expected to have opposite signs and the two horizontal neighboring indices are expected to have the same sign. In HH subband, the two neighboring indices in both directions are expected to have opposite signs.

As a result the reconstruction rule of (6) is modified in this exemplary embodiment as:

$$x_{q=0,Label=i} = \theta_i \qquad (10)$$

wherein $\theta_i$ is the reconstruction value corresponding to context $i$. Generally, the following relationships are satisfied for the zero quantization index if ξ=0:

$$\Delta > \theta_2 > \theta_1 > \theta_0 > \theta_{-1} > \theta_{-2} > -\Delta \qquad (11)$$

wherein $\theta_0=0$ is the default reconstruction value which is not comprised in the side information. It further has been found in analyses that

$$\theta_{-i} \approx -\theta_i, \quad i \in \{-2, -1, 0, 1, 2\} \qquad (12)$$

Therefore, only the absolute of alternative reconstruction values is encoded in the side information and the sign is regained from the context at the decoder side.

A further reduction of side information over-head may be achieved by inserting only $\theta_1$ into the side information and forming the other alternative reconstruction values as:

$$\theta_i = i * \theta_1, \quad i \in \{-2, -1, 0, 1, 2\} \qquad (12)$$

Even $\theta_1$ needs not to be comprised in the side information if $\theta_i$ is determined at the decoder side as:

$$\theta_i = \frac{i}{(i_{max} + 1)} * \Delta, \quad i \in \{-i_{max}, ..., -1, 0, 1, ..., i_{max}\} \qquad (13)$$

But then, -as said- the gain in image quality may be limited because in this scheme the picture content is no longer taken into account which makes statistical analysis at the encoder superfluous.

In another approach, differences between current alternative reconstruction values and previous alternative reconstruction values are transmitted.

If the quantization index which is expanded by help of alternative reconstruction values is not pre-defined but determined per picture, per picture sequence or per video, the determined index value is transmitted as side information, too.

A subband flag bits may further serve for using prior art de-quantization and context-dependent de-quantization alternatively in dependence on deviation of means of context-dependent probability distributions from mean of a context-independent probability distribution in a subband. The subband flag bit indicates whether or not the corresponding subband uses context-based inverse quantization. Only if the subband uses the context-based inverse quantization, further side information bits need to be sent to indicate reconstruction values.

It has been found that context modeling has most significant effect in HL1 and LH1 subband. Though the mean for positive and negative contexts in HH1 subband is also far from zero, the number of indices in positive and negative contexts is little for there are less significant (non-zero) indices in HH1 subband.

By using context-based inverse quantization in HL1 and LH1 subbands based on 5 different contexts, an improvement about 0.22 dB in PSNR was gained for an exemplary 512*512 gray scale image transformed by a five-level two-D (9,7) DWT, and quantized with a dead-zone uniform scalar quantizer with Δ=16. The overhead cost was merely 35 bits which is fully negligible compared to image size.

Further PSNR enhancement may be achieved by modelling the context more elaborate and/or by modelling the context for significant (non-zero) indices, also or instead of zero quantization index.

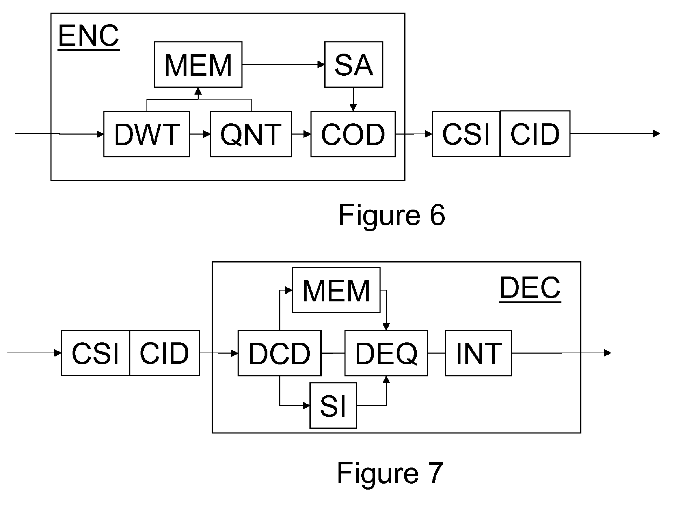

Fig. 6 depicts an exemplary embodiment of an encoder adapted for encoding one or more alternative reconstruction values as side information. The encoder comprises a transformer DWT, which is provided with the original image or video and transforms the original video into a set of coefficients, a quantizer QNT which quantizes the coefficients and a coding module COD which forms a bit stream from the coefficients. The transformer DWT and the quantizer QNT provide information to a buffer memory MEM which is accessed by a statistical analyser SA which evaluates relations between coefficients, quantization indexes and contexts for providing said alternative reconstruction values. Said alternative reconstruction values are then output as side information which is coded together with the quantized coefficients into a bit stream comprising coded side information CSI and coded image data CID.

Fig. 7 depicts an exemplary embodiment of a decoder adapted for decoding one or more alternative reconstruction values as side information. The decoder comprises a decoding device DCD which receives a bit stream comprising coded side information CSI and coded image data CID. The decoding device DCD outputs decoded side information SI, which comprises alternative reconstruction values, and decoded index values which are stored in a memory MEM. The decoder side information SI is used by a de-quantizer DEQ for de-quantizing coefficients quantized to, for instance, Zero quantization index in dependency on context determined by help of the memory MEM. The context is based on quantization indexes of coefficients spatially neighbouring a quantization index value under inspection. This results in a decoded image or video with a high quality.

**Claims**

1. Method for decoding an encoded image, said method comprises de-quantizing a current index value by

   - determining, by help of one or more neighbouring index values, a current context of the current index value and
   - selecting a de-quantization value from a set of reconstruction values ($-x_0$'', $-x_0$', $x_0$, $x_0$', $x_0$'') wherein the selection depends on the current context.

2. Method according to claim 1, said method further comprises

   - receiving one or more alternative reconstruction values ($-x_0$'', $-x_0$', $x_0$', $x_0$'') comprised in side information of the encoded image,
   - wherein the set of reconstruction values ($-x_0$'', $-x_0$', $x_0$, $x_0$', $x_0$'') comprises one or more pre-defined reconstruction values ($x_0$) and the received alternative reconstruction values ($-x_0$'', $-x_0$', $x_0$', $x_0$'').

3. Method for encoding an image, said method comprises the steps of

   - transforming at least a part of the image into a set of coefficients,
   - determining coefficients of the set which are situated in a current context and which are quantized to a current index value,
   - analysing the determined coefficients,
   - determining a alternative reconstruction value based on the analysis and
   - encoding as side information, information concerning the alternative reconstruction value ($-x_0$'', $-x_0$', $x_0$', $x_0$'').

4. Method according to claim 3, further comprising

   - determining the current index value by analysis of the set of transform coefficients.

5. Method according to claim 3 or 4, further comprising encoding at least one further alternative reconstruction value in said side information, said at least one further alternative reconstruction value being determined by analysis of context-dependency of coefficients quantized to a further index value.

6. Method according to one of the preceding claims, wherein the current context depends on

   - a horizontal context ($h[i,j]$) based on the signs of horizontally neighbouring index values ($S[i,j-1]$. $S[i,j+1]$) and
   - a vertical context ($v[i,j]$) based on the signs of vertically neighbouring index values ($S[i-1,j]$, $S[i+1,j]$).

7. Method according to one of the preceding claims, wherein

   - the current context further depends on a subband (HL subband, LH subband, HH subband) to which the current index value belongs.

8. Method according to claim 7, wherein

   - the current context only depends on a low frequency component of the subband, if the high frequency component is equal to 0.

9. Device (DEC) for decoding an encoded image, said decoder comprises

   - means for determining, by help of one or more neighbouring index values, a current context of a current index value and
   - means (DEQ) for selecting a de-quantization value from a set of reconstruction values ($-x_0''$, $-x_0'$, $x_0$, $x_0'$, $x_0''$) which comprises one or more pre-defined reconstruction values ($x_0$) wherein the selection depends on the current context.

10. Device (DEC) according to claim 9, further comprising means (DCD) for receiving the one or more alternative reconstruction values ($-x_0''$, $-x_0'$, $x_0'$, $x_0''$) as side information (CSI) of the encoded image (CID).

11. Device (ENC) for encoding an image, said encoder comprises

   - a transformer (DWT) for transforming at least a part of the image into coefficients,
   - a quantizer (QNT) for mapping coefficients to one of at least two index values,
   - means for selecting coefficients which are situated in a current context and which are mapped to a current index value,
   - means (SA) for analysing the selected coefficients,
   - means (SA) for determining an alternative reconstruction value based on the analysis and
   - means (COD) for encoding as side information (CSI), information concerning the alternative reconstruction value.

12. Signal or storage medium comprising an encoded image (CID) with side information (CSI), said side information (CSI) comprises information concerning one or more alternative reconstruction values ($-x_0''$, $-x_0'$, $x_0'$, $x_0''$) allowing for context-dependent de-quantization of a current quantization index of the encoded image (CID).

13. Method according to one of the claims 2 to 8, device according to one of the claims 9 to 11 or signal or storage medium according to claim 12, wherein said side information (CSI) further comprises the current index value.

14. Method according to one of the claims 2 to 8 and 13, device according to one of the claims 9 to 11 and 13, or signal or storage medium according to claim 12 or 13, wherein the alternative reconstruction value is an absolute value.

15. Decoding method or decoding device according to claim 14, further comprising determination of a de-quantization sign based on the current context.

$-x_3$    $-x_2$    $-x_1$     $x_0$     $x_1$    $x_2$    $x_3$

$-4\Delta$   $-3\Delta$   $-2\Delta$   $-\Delta$    $0$     $\Delta$    $2\Delta$    $3\Delta$    $4\Delta$

$x$

## Figure 1 - prior art

$-x_1$     $-x_0{}''$   $-x_0{}'$   $x_0$   $x_0{}'$   $x_0{}''$     $x_1$

$-2\Delta$      $-\Delta$      $0$      $\Delta$      $2\Delta$

$x$

## Figure 3

Figure 2(a)

Figure 4

Figure 2(b)

Figure 2(c)

| | HL subband | | LH subband | | HH subband |
|---|---|---|---|---|---|
| Label | h[i,j] | v[i,j] | h[i,j] | v[i,j] | h[i,j]+v[i,j] |
| 2 | $\leq$ -1 | ./. | ./. | $\leq$ -1 | $\leq$ -2 |
| 1 | 0 | $\geq$ 1 | $\geq$ 1 | 0 | -1 |
| 0 | 0 | 0 | 0 | 0 | 0 |
| -1 | 0 | $\leq$ -1 | $\leq$ -1 | 0 | -1 |
| -2 | $\geq$ 1 | ./. | ./. | $\geq$ 1 | $\geq$ 2 |

Figure 5

Figure 6

Figure 7

Europäisches
Patentamt

European
Patent Office

Office européen
des brevets

**EUROPEAN SEARCH REPORT**

Application Number

EP 08 30 5486

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ORDENTLICH ERIK; WEINBERGER MARCELO; SEROUSSI GADIEL: "Low-complexity modeling approach for embedded coding of wavelet coefficients" HP LABORATORIES TECHNICAL REPORT, 97-150, [Online] December 1997 (1997-12), pages 1-14, XP002513952 Computer Systems Lab, Retrieved from the Internet: URL:www.hpl.hp.com/techreports/97/HPL-97-150.html> [retrieved on 2009-02-02] | 1-5,7-15 | INV. H04N7/26 |
| Y | * page 8, line 19 - page 9, line 30 * | 6 | |
| X | DEEVER A T: "Biased reconstruction of wavelet coefficients in JPEG2000 decoding" IEEE ICIP 2002, vol. 3, 22 September 2002 (2002-09-22), pages 245-248, XP010607700 ISBN: 978-0-7803-7622-9 * abstract * * page 246, section 3 - page 247 section 4 | 1,4,6-9, 13-15 | |
| X | ISO/IEC JTC1/SC29 WG1 ET AL: "JPEG 2000 Part I Final Draft International Standard (corrected and formatted)" JOINT PHOTOGRAPHIC EXPERT GROUP CONFERENCE, CROWBOROUGH : JPEG FORUM LTD, GB, 25 September 2000 (2000-09-25), XP017205712 | 1,7-9, 13-15 | TECHNICAL FIELDS SEARCHED (IPC) H04N |
| Y | * Annex D, E * | 6 | |

-/--

The present search report has been drawn up for all claims

| Place of search | Date of completion of the search | Examiner |
|---|---|---|
| The Hague | 9 February 2009 | Mayer, Claudia |

CATEGORY OF CITED DOCUMENTS

X : particularly relevant if taken alone
Y : particularly relevant if combined with another
　document of the same category
A : technological background
O : non-written disclosure
P : intermediate document

T : theory or principle underlying the invention
E : earlier patent document, but published on, or
　after the filing date
D : document cited in the application
L : document cited for other reasons

& : member of the same patent family, corresponding
　document

EPO FORM 1503 03.82 (P04C01)

**EUROPEAN SEARCH REPORT**

Application Number

EP 08 30 5486

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DAVID TAUBMAN: "High Performance Scalable Image Compression with EBCOT" IEEE TRANSACTIONS ON IMAGE PROCESSING, IEEE SERVICE CENTER, PISCATAWAY, NJ, US, vol. 9, no. 7, 1 July 2000 (2000-07-01), XP011025627 ISSN: 1057-7149 * Section III.A, III.C.3 * ----- | 1,7-9, 13-15 | |
| X | LEPLEY MARGARET A: "Tuning JPEG 2000 decompression performance via rounding: theory & practice" PROCEEDINGS OF SPIE - THE INTERNATIONAL SOCIETY FOR OPTICAL ENGINEERING, SOCIETY OF PHOTO-OPTICAL INSTRUMENTATION ENGINEERS, APPLICATIONS OF DIGITAL IMAGE PROCEDDING XXIII, vol. 4115, 2000, pages 502-509, XP002513953 San Diego, CA, USA * abstract * Section 2.1, 2.2, 2.4, 2.5, 3.1, 3.2 ----- | 1,7-9, 13-15 | |

TECHNICAL FIELDS SEARCHED (IPC)

The present search report has been drawn up for all claims

| Place of search | Date of completion of the search | Examiner |
|---|---|---|
| The Hague | 9 February 2009 | Mayer, Claudia |